# EUROPEAN PATENT APPLICATION

(11) **EP 3 116 155 A1**
(43) Date of publication of application: **11.01.2017**
(21) Application number: 14888365.5
(22) Date of filing: 03.04.2014
(51) Int. Cl.: H04L 1/00

(54) **CSI REPORT METHOD AND EQUIPMENT**

(71) Applicant: HUAWEI TECHNOLOGIES CO., LTD., Guangdong 518129 (CN)
(72) Inventor: WANG, Jianguo, Shenzhen Guangdong 518129 (CN); ZHOU, Yongxing, Shenzhen Guangdong 518129 (CN); LIU, Jianghua, Shenzhen Guangdong 518129 (CN)
(74) Representative: Gill Jennings & Every LLP
(86) International application number: PCT/CN2014/074740
(87) International publication number: WO 2015/149333

(57) **Abstract**

Embodiments of the present invention disclose a CSI reporting method and a device, and the method may include: receiving subband size configuration information sent by a base station, where the subband size configuration information includes a user equipment-specific subband size configuration index; determining a subband size according to the user equipment-specific subband size configuration index; determining CSI, where the CSI reflects transmission on at least one subband, and the subband is determined according to the subband size; and sending the CSI to the base station. According to the embodiments of the present invention, performance of a communications system can be improved.

## Description

### TECHNICAL FIELD

The present invention relates to the communications field, and in particular, to a channel state information (Channel State Information, CSI) reporting method and a device.

### BACKGROUND

In a communications system, channel state information (Channel State Information, CSI for short) generally describes a channel condition during transmission in a specified bandwidth, may be used for link adaptation and resource scheduling, and plays a vital role in obtaining a channel characteristic to improve a system throughput. The channel state information generally includes a channel quality indicator (Channel Quality Indicator, CQI for short). In addition, for a system using precoding, the CQI is further calculated based on a used precoding matrix. The precoding matrix is generally indicated by one or more indexes, such as a precoding matrix indicator (Precoding Matrix Indicator, PMI for short) and a quantity of layers of the precoding matrix or a rank indicator (Rank Indication, RI for short). The CSI is generally fed back by user equipment (User Equipment, UE) to a base station (Base station, BS). In an existing LTE system, CSI information is fed back according to different frequency-domain granularities. An entire system bandwidth is divided into multiple subbands, and a size of the subband is determined according to the system bandwidth and a reporting mode.

In a current communications system, a rapid increase in service requirements is mainly resolved by common coverage of a macro cell system and a micro cell system. A location of a base station or a transmitter in the macro cell system is generally higher than a height of a surrounding building, and a location of a base station or a transmitter in the micro cell system is generally lower than the height of the surrounding building. In addition, the foregoing systems are mainly designed for communication with outdoor UE, that is, considered UE is mainly distributed on the ground.

In the foregoing two communications systems, all UEs need to feed back CSI to the base station. However, in actual application, UEs in a high-density UE scenario are mainly distributed indoors, for example, inside a building from the second floor to the eighth floor. In the scenario, different distances between the UEs and the base station or different heights at which the UEs are located result in different multipath propagation between the UEs and the base station, and in particular, result in apparently different multipath delay spreads. Therefore, when a subband size of a subband described by CSI is determined according to a system bandwidth and a reporting mode, a determined subband size is configured for the UE, which cannot adapt to the foregoing case of resulting in different multipath propagation between the UEs and the base station, and in particular, resulting in apparently different multipath delay spreads, and consequently, performance of the communications system is degraded.

### SUMMARY

Embodiments of the present invention provide a CSI reporting method and a device, so that performance of a communications system can be improved.

According to a first aspect, an embodiment of the present invention provides a CSI reporting method, including:
receiving subband size configuration information sent by a base station, where the subband size configuration information includes a UE specific subband size configuration index;
determining a subband size according to the UE specific subband size configuration index;
determining CSI, where the CSI reflects transmission on at least one subband, and the subband is determined according to the subband size; and
sending the CSI to the base station.

In a first possible implementation manner of the first aspect, the determining a subband size according to the UE specific subband size configuration index includes:
determining a subband size from a subband size set according to the UE specific subband size configuration index.

With reference to the first possible implementation manner of the first aspect, in a second possible implementation manner of the first aspect, the subband size set is a cell specific subband size set.

With reference to the second possible implementation manner of the first aspect, in a third possible implementation manner of the first aspect, the method further includes:
receiving a cell specific subband size configuration index sent by the base station, where the cell specific subband size set is determined according to the cell specific subband size configuration index.

With reference to any one of the foregoing possible implementation manners of the first aspect, in a fourth possible implementation manner of the first aspect, the CSI includes a channel quality indicator CQI and a precoding matrix indicator PMI, a subband size used by the PMI is N times a subband size used by the CQI, the subband size used by the CQI is the subband size determined according to the subband size configuration index, and N is a positive integer.

According to a second aspect, the present invention provides a CSI reporting method, including:
sending subband size configuration information to UE, where the subband size configuration information includes a UE specific subband size configuration index; and
receiving CSI sent by the UE, where the CSI reflects transmission on at least one subband, the subband is determined according to a subband size, and the subband size is determined according to the UE specific subband size configuration index.

In a first possible implementation manner of the second aspect, the method further includes:
determining the subband size from a subband size set according to the UE specific subband size configuration index.

With reference to the first possible implementation manner of the second aspect, in a second possible implementation manner of the second aspect, the subband size set is a cell specific subband size set.

With reference to the second possible implementation manner of the second aspect, in a third possible implementation manner of the second aspect, the method further includes:
sending a cell specific subband size configuration index to the UE, where the cell specific subband size set is determined according to the cell specific subband size configuration index.

With reference to any one of the foregoing possible implementation manners of the second aspect, in a fourth possible implementation manner of the second aspect, the CSI includes a channel quality indicator CQI and a precoding matrix indicator PMI, a subband size used by the PMI is N times a subband size used by the CQI, the subband size used by the CQI is the subband size determined according to the subband size configuration index, and N is a positive integer.

According to a third aspect, the present invention provides user equipment, including: a receiving unit, a determining unit, a calculation unit, and a sending unit, where
the receiving unit is configured to receive subband size configuration information sent by a base station, where the subband size configuration information includes a UE specific subband size configuration index;
the determining unit is configured to determine a subband size according to the UE specific subband size configuration index;
the calculation unit is configured to determine CSI, where the CSI reflects transmission on at least one subband, and the subband is determined according to the subband size; and
the sending unit is configured to send the CSI to the base station.

In a first possible implementation manner of the third aspect, the determining unit is specifically configured to determine a subband size from a subband size set according to the UE specific subband size configuration index.

With reference to the first possible implementation manner of the third aspect, in a second possible implementation manner of the third aspect, the subband size set is a cell specific subband size set.

With reference to the second possible implementation manner of the third aspect, in a third possible implementation manner of the third aspect, the receiving unit is further configured to receive a cell specific subband size configuration index sent by the base station; and
the determining unit is further configured to determine the cell specific subband size set according to the cell specific subband size configuration index information.

With reference to any one of the foregoing possible implementation manners of the third aspect, in a fourth possible implementation manner of the third aspect, the CSI includes a channel quality indicator CQI and a precoding matrix indicator PMI, a subband size used by the PMI is N times a subband size used by the CQI, the subband size used by the CQI is the subband size determined according to the subband size configuration index, and N is a positive integer.

According to a fourth aspect, the present invention provides a base station, including: a sending unit and a receiving unit, where
the sending unit is configured to send subband size configuration information to UE, where the subband size configuration information includes a UE specific subband size configuration index; and
the receiving unit is configured to receive CSI sent by the UE, where the CSI reflects transmission on at least one subband, the subband is determined according to a subband size, and the subband size is determined according to the UE specific subband size configuration index.

In a first possible implementation manner of the fourth aspect, the apparatus further includes:
a determining unit, configured to determine the subband size from a subband size set according to the UE specific subband size configuration index.

With reference to the first possible implementation manner of the fourth aspect, in a second possible implementation manner of the fourth aspect, the subband size set is a cell specific subband size set.

With reference to the second possible implementation manner of the fourth aspect, in a third possible implementation manner of the fourth aspect, the sending unit is further configured to send a cell specific subband size configuration index to the UE, where the cell specific subband size set is determined according to the cell specific subband size configuration index.

With reference to any one of the foregoing possible implementation manners of the fourth aspect, in a fourth possible implementation manner of the fourth aspect, the CSI includes a channel quality indicator CQI and a precoding matrix indicator PMI, a subband size used by the PMI is N times a subband size used by the CQI, the subband size used by the CQI is the subband size determined according to the subband size configuration index, and N is a positive integer.

According to a fifth aspect, the present invention provides user equipment, including: a receiver, a transmitter, and a processor that is separately connected to the receiver and the transmitter, where
the receiver is configured to receive subband size configuration information sent by a base station, where the subband size configuration information includes a UE specific subband size configuration index;
the processor is configured to determine a subband size according to the UE specific subband size configuration index;
the processor is further configured to determine CSI, where the CSI reflects transmission on at least one subband, and the subband is determined according to the subband size; and
the transmitter is configured to send the CSI to the base station.

In a first possible implementation manner of the fifth aspect, the processor is configured to determine a subband size from a subband size set according to the UE specific subband size configuration index.

With reference to the first possible implementation manner of the fifth aspect, in a second possible implementation manner of the fifth aspect, the subband size set is a cell specific subband size set.

With reference to the second possible implementation manner of the fifth aspect, in a third possible implementation manner of the fifth aspect, the receiver is further configured to receive a cell specific subband size configuration index sent by the base station, where the cell specific subband size set is determined according to the cell specific subband size configuration index.

With reference to any one of the foregoing possible implementation manners of the fifth aspect, in a fourth possible implementation manner of the fifth aspect, the CSI includes a channel quality indicator CQI and a precoding matrix indicator PMI, a subband size used by the PMI is N times a subband size used by the CQI, the subband size used by the CQI is the subband size determined according to the subband size configuration index, and N is a positive integer.

According to a sixth aspect, the present invention provides a base station, including: a transmitter and a receiver, where
the transmitter is configured to send subband size configuration information to UE, where the subband size configuration information includes a UE specific subband size configuration index; and
the receiver is configured to receive CSI sent by the UE, where the CSI reflects transmission on at least one subband, the subband is determined according to a subband size, and the subband size is determined according to the UE specific subband size configuration index.

In a first possible implementation manner of the sixth aspect, the base station further includes:
a processor, configured to determine the subband size from a subband size set according to the UE specific subband size configuration index.

With reference to the first possible implementation manner of the sixth aspect, in a second possible implementation manner of the sixth aspect, the subband size set is a cell specific subband size set.

With reference to the second possible implementation manner of the sixth aspect, in a third possible implementation manner of the sixth aspect, the transmitter is further configured to send a cell specific subband size configuration index to the UE, where the cell specific subband size set is determined according to the cell specific subband size configuration index.

With reference to any one of the foregoing possible implementation manners of the sixth aspect, in a fourth possible implementation manner of the sixth aspect, the CSI includes a channel quality indicator CQI and a precoding matrix indicator PMI, a subband size used by the PMI is N times a subband size used by the CQI, the subband size used by the CQI is the subband size determined according to the subband size configuration index, and N is a positive integer.

In the foregoing technical solutions, subband size configuration information sent by a base station is received, where the subband size configuration information includes a UE specific subband size configuration index; a subband size is determined according to the UE specific subband size configuration index; CSI is determined, where the CSI reflects transmission on at least one subband, and the subband is determined according to the subband size; and the CSI is sent to the base station. Therefore, it can be implemented that a subband size of a subband reflected by the CSI is a UE specific subband size specified by the base station, so that the subband size can better adapt to an environment of the UE, and performance of a communications system can be improved.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a CSI reporting method according to an embodiment of the present invention;
FIG. 2 is a schematic flowchart of another CSI reporting method according to an embodiment of the present invention;
FIG. 3 is a schematic structural diagram of user equipment according to an embodiment of the present invention;
FIG. 4 is a schematic structural diagram of another base station according to an embodiment of the present invention;
FIG. 5 is a schematic structural diagram of user equipment according to an embodiment of the present invention; and
FIG. 6 is a schematic structural diagram of another base station according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

The embodiments of the present invention may be applied to various communications systems, such as: a Global System for Mobile Communications (Global System of Mobile communication, GSM), a Code Division Multiple Access (Code Division Multiple Access, CDMA) system, a Wideband Code Division Multiple Access (Wideband Code Division Multiple Access Wireless, WCDMA), a general packet radio service (General Packet Radio Service, GPRS), and a Long Term Evolution (Long Term Evolution, LTE) system.

In addition, UE in the embodiments of the present invention may also be referred to as a mobile terminal (Mobile Terminal), mobile UE, or the like, and may communicate with one or more core networks by using a radio access network (Radio Access Network, RAN). The UE may be a mobile terminal or a mobile station (Mobile Station, MS), such as a mobile phone (or referred to as a "cellular" phone) and a computer with a mobile terminal, where for example, the UE may be a portable, pocket-sized, handheld, computer built-in, or in-vehicle mobile apparatus; or the UE may be a relay (Relay), which exchanges voice and/or data with the radio access network.

In addition, a base station in the embodiments of the present invention may be a base transceiver station (BTS, Base Transceiver Station) in GSM or CDMA, may be a NodeB (NodeB) in WCDMA, or may be an evolved NodeB (eNB or evolved Node B, e-NodeB) in LTE, or a relay (Relay), which is not limited in the embodiments of the present invention.

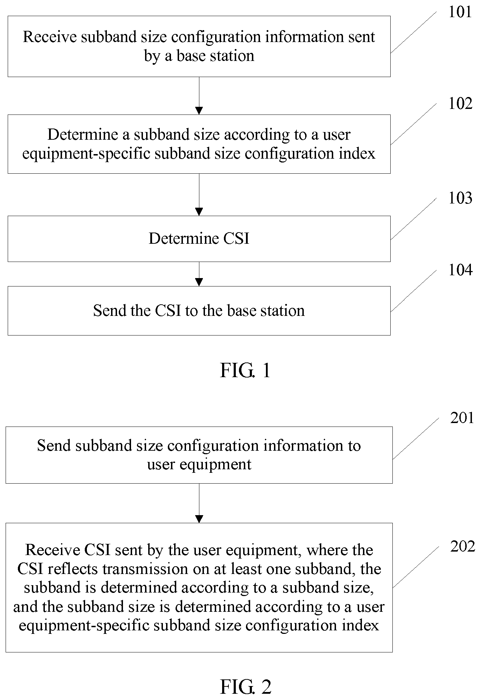

FIG. 1 is a schematic flowchart of a CSI reporting method according to an embodiment of the present invention. As shown in FIG. 1, the method may be applied to UE and include the following steps:
101. Receive subband size configuration information sent by a base station, where the subband size configuration information includes a UE specific subband size configuration index.

Optionally, the subband size configuration information may be received by using UE specific (UE specific) signaling such as dedicated radio resource control (Radio Resource Control, RRC for short) signaling, or downlink control information (Downlink Control Information, DCI for short).

102. Determine a subband size according to the UE specific subband size configuration index.

Optionally, the subband size may be obtained according to a mapping relationship between the UE specific subband size configuration index and the subband size. Obviously, the obtained subband size is a UE specific subband size.

103. Determine CSI, where the CSI reflects transmission on at least one subband, and the subband is determined according to the subband size.

Optionally, a system bandwidth may be divided into multiple subbands according to the subband size. One or more subbands reflected by the CSI may be determined according to the subband division. Obviously, the subband division is also UE specific. Subband sizes of different UEs may be different.

Optionally, the CSI may include a channel quality indicator (Channel Quality Indicator/Index, CQI for short), or a precoding matrix indicator (Precoding Matrix Indicator, PMI for short), or a rank indicator (Rank Indicator, RI for short), or the like.

104. Send the CSI to the base station.

Optionally, the CSI may be sent to the base station by using a physical uplink control channel (Physical Uplink Contol Channel, PUCCH for short) or a physical uplink shared channel (Physical Uplink Shared Channel, PUSCH for short).

Optionally, because the UEs are in different cell environments, channel propagation between the UEs and the base station has different delay spreads and accordingly has different coherence bandwidths. The coherence bandwidth is generally inversely proportional to the delay spread. For example, UE located in an urban micro cell (Urban Micro cell, UMi) generally has a larger delay spread than UE located in an urban macro cell (Urban Macro cell, UMa), and accordingly has a lower coherence bandwidth. In addition, even if the UEs are in a same cell, different locations of the UEs, and in particular, different distances between the UEs and the base station or different heights at which the UEs are located result in different delay spreads of propagation between the UEs and the base station. In the foregoing case, the base station may determine a UE specific (UE specific) subband size configuration for the UE. For example, a UE specific (UE specific) subband size may be determined according to a coherence bandwidth of a channel between the UE and the base station. For example, a subband size for which a similarity of the coherence bandwidth of the channel between the UE and the base station is greater than a preset threshold is determined as the UE specific (UE specific) subband size. The foregoing preset threshold may be negotiated between the base station and the UE in advance, or may be set by a user, for example, a value such as 90%, 95%, or 100%. Therefore, it is ensured that the foregoing target subband size is relatively close to or even equal to a size of the foregoing coherence bandwidth. In actual application, the foregoing coherence bandwidth may vary with a location in which a user is located, and it can be implemented, by using the foregoing step, that the UE specific (UE specific) subband size may also vary with the location in which the user is located.

Optionally, the base station may obtain a delay spread or a coherence bandwidth (coherence bandwidth) of an uplink channel by measuring an uplink physical signal such as a sounding reference signal (Sounding Referene Signal, SRS for short) or an uplink demodulation reference signal (DeModulation Reference Signal, DMRS for short) of the UE, and may obtain a delay spread or a coherence bandwidth of a downlink channel based on channel reciprocity (reciprocity), so as to determine the subband size for the UE. Similarly, the base station may determine the subband size for the UE by measuring an uplink physical channel such as a physical uplink control channel (Physical Uplink Contronl CHannel, PUCCH for short) or a physical uplink shared channel (Physical Uplink Shared CHannel, PUSCH for short) of the UE. Because channels between the different UEs and the base station are UE specific, the subband size obtained based on the foregoing channel measurement is also UE specific.

Optionally, the base station may send the UE specific subband size configuration index (subband size configuration index) to the UE to instruct the UE to use the UE specific subband size, where the UE specific subband size used by the UE is corresponding to the UE specific subband size configuration index. By receiving the UE specific subband size configuration index sent by the base station, the UE may determine a subband size based on the received UE specific subband size configuration index.

Specifically, the UE specific subband size configuration index may be used to indicate an element in a predefined subband size set, where each element is a subband size, or the UE specific subband size is a function of the UE specific subband size configuration index, where the function may be predefined. The predefined subband size set or the predefined function is mutually known to the UE and the base station. The UE may determine the UE specific subband size according to the received UE specific subband size configuration information and based on the predefined subband size set or the predefined function.

A subband size in this embodiment is obtained according to a UE specific (UE specific) subband size configuration index, so that UE can calculate and feed back CSI based on the UE specific subband size. Therefore, it can be implemented that a subband size of a subband reflected by the CSI is a UE specific subband size specified by a base station, so that the subband size can better adapt to an environment of the UE, and performance of a communications system can be improved. In addition, the UE specific subband size configuration enables the user equipment to automatically adapt to different propagation environments according to a system configuration, and in particular, to automatically adapt to a change of a coherence bandwidth (coherence bandwidth) of a channel between the UE and the base station. In addition, because the subband size of the CSI is the UE specific subband size, CSI feedback precision can be improved, thereby improving the system performance.

Optionally, in an embodiment, before step 101, the UE may further report a subband size indication to the base station, and the base station may determine the UE specific subband size configuration index according to the subband size indication reported by the UE. The subband size indication may be the same as the UE specific subband size configuration index configured by the base station. Specifically, the UE may further obtain a delay spread or a coherence bandwidth of a channel between the UE and the base station by measuring a downlink reference signal, such as a cell specific reference signal (Cell specific Reference Signal, CRS for short) or a channel state information reference signal (Channel State Information Reference Signal, CSI-RS for short), and select a subband size based on the delay spread or the coherence bandwidth, where the subband size indication is corresponding to the selected subband size.

Optionally, in another embodiment, the determining a subband size according to the UE specific subband size configuration index in step 102 includes:
determining a subband size from a subband size set according to the UE specific subband size configuration index.

Optionally, the subband size set may include multiple same or different subband sizes. The subband size configuration index is used to indicate a subband size in the subband size set. Each subband size in the subband size set is corresponding to one subband size configuration index. It should be further noted that the subband size set may include multiple subband sizes with a same value.

The subband size set maybe predefined, or a mapping relationship or a correspondence between the subband size configuration index and each subband size in the subband size set may be predefined (predefined), and is mutually known to the UE and the base station. For example, subband sizes corresponding to different subband size configuration indexes may be shown in Table 1.

**Table 1: Subband size K and UE specific subband size configuration index SCI_{UE}**

| | **SCI_{UE}** | | | |
|---|---|---|---|---|
| | 0 | 1 | 2 | 3 |
| **K** | 1B | 2B | 3B | 4B |

SCI_{UE} indicates a subband size configuration index; the foregoing B indicates a unit of a subband size, for example, B may be one or more physical resource blocks (Physical Resource Block, PRB); K indicates a subband size in units of B. For example, when SCI_{UE} is 1 (that is, the foregoing subband size configuration index information is 1), the subband size determined in the foregoing step 102 is 2B; when SCI_{UE} is 2, the subband size determined in step 102 is 2B.

Optionally, the UE may obtain a subband size from the subband size set in the foregoing table according to the received UE specific subband size configuration index. For example, when UE specific subband size configuration indexes SCIUE are 0, 1, 2, and 3, subband sizes K may be obtained and are B, 2B, 3B, and 4B respectively, where B may be 1. In addition, the subband size may also be a predefined function of a subband size configuration index.

Further, the subband size set may be a cell specific (cell specific) subband size set.

Optionally, step 102 may specifically include:
determining a subband size from a cell specific subband size set according to the UE specific subband size configuration index.

Optionally, the cell specific subband size set is indicated by a cell specific subband size configuration index notified by the base station. For example, the method may further include:
receiving a cell specific subband size configuration index sent by the base station, where the cell specific subband size set is determined according to the cell specific subband size configuration index.

In this way, the foregoing cell specific subband size set can be determined according to the cell specific subband size configuration index.

Optionally, a cell specific subband size set corresponding to a cell specific subband size configuration index may be shown in Table 2.

**Table 2: Subband size K, cell specific subband size configuration index SCI_{cell}, and UE specific subband size configuration index SCI_{UE}**

| **SCI_{cell}** | **SCI_{UE}** | | | |
|---|---|---|---|---|
| | 0 | 1 | 2 | 3 |
| 0 | B | 2B | 3B | 4B |
| 1 | B | 4B | 6B | 8B |
| 2 | B | 2B | 4B | 8B |
| 3 | 2B | 4B | 6B | 8B |

SCIcell indicates a cell specific subband size set configuration index, SCIUE indicates a UE specific subband size configuration index, K indicates a corresponding subband size, B is a unit of a subband size, and B may be one or more PRBs. For example, when SCIcell is 1 (that is, the foregoing cell specific subband size set configuration index is 1), subband sizes included in a cell specific subband size set corresponding to SCIcell are {B, 4B, 6B, 8B}, and when SCIUE is 1 (that is, the foregoing UE specific subband size configuration index is 1), it may be determined from the foregoing cell specific subband size set that a UE specific subband size corresponding to SCIUE is 4B.

Optionally, the cell specific subband size configuration index may be a cell type or obtained according to a cell identity (cell ID).

Optionally, the band size set configuration information in step 101 in the method may further include a cell specific subband size configuration index, and the cell specific subband size set in step 102 is determined according to the cell specific subband size configuration index.

Optionally, in another embodiment, step 102 may specifically include:
determining a subband size from a subband size set according to the cell specific subband size set configuration index and the UE specific subband size configuration index.

The determined subband size is a subband size of the foregoing cell specific subband size configuration index and the UE specific subband size configuration index. Specifically, the cell specific subband size set may be first determined according to the cell specific subband size configuration index, and then the subband size is determined from the cell specific subband size set according to the UE specific subband size configuration index, or the subband size is determined from the subband size set according to both the cell specific subband size configuration index and the UE specific subband size configuration index. As shown in Table 2, when the foregoing cell specific subband size configuration index is 1 and the foregoing UE specific subband size configuration index is 1, it may be directly determined that the subband size is a subband size of 4B. Specifically, multiple subband sizes (which belong to different cell specific subband size sets) may be determined according to the UE specific subband size configuration index, and then a subband size is determined according to the cell specific subband size configuration index, that is, the subband size that is determined according to the UE specific subband size configuration index and included in the cell specific subband size set is obtained. As shown in Table 2, when the foregoing cell specific subband size configuration index is 1 and the foregoing UE specific subband size configuration index is 1, subband sizes 2B, 4B, 2B, and 4B may be first determined according to the foregoing UE specific subband size configuration index 1, and then a subband size set 1 is determined according to the cell specific subband size configuration index 1, to determine a subband size 4B included in the subband size set 1.

In this embodiment, UE obtains a subband size from a cell specific subband size set according to a UE specific (UE specific) subband size configuration index, so that the UE can obtain the UE specific subband size based on different cell environments (for example, different radio propagation characteristics in a macro cell and a micro cell), and calculate and feed back CSI. Therefore, the UE specific subband size configuration enables the user equipment to automatically adapt to different propagation environments according to a system configuration and particularly radio propagation characteristics in different cell environments, and in particular, to automatically adapt to a change of a coherence bandwidth (coherence bandwidth) of a channel between the UE and the base station, so as to improve CSI feedback precision, and improve a system performance.

Optionally, in another embodiment, the CSI in step 103 may include a channel quality indicator CQI and a precoding matrix indicator PMI or a rank indicator RI.

A subband size corresponding to the precoding matrix indicator PMI or the rank indicator RI may be an integer multiple of a subband size corresponding to the channel quality indicator CQI. In addition, the subband size corresponding to the precoding matrix indicator PMI may be understood as a subband size used by the PMI, the subband size corresponding to the RI may be understood as a subband size used by the RI, and the subband size corresponding to the CQI may be understood as a subband size used by the CQI, where the subband size used by the CQI is the subband size determined according to the subband size configuration index. For example, the subband size corresponding to the precoding matrix indicator PMI or the rank indicator RI may be N times the subband size corresponding to the channel quality indicator CQI, where N is an integer greater than or equal to 1, and a specific value of N may be determined according to a UE transmission mode or a CSI reporting mode.

Optionally, because the channel quality indicator CQI is generally used for scheduling and user pairing, the CQI has stronger frequency selectivity than the PMI or the RI. The subband size corresponding to the CQI is 1/N the subband size corresponding to the precoding matrix indicator PMI or the rank indicator RI, and better helps implement frequency selective scheduling, thereby improving a provided throughput.

In this embodiment, UE obtains a subband size from a cell specific subband size set according to a UE specific (UE specific) subband size configuration index, where a subband size corresponding to a precoding matrix indicator PMI or a rank indicator RI is an integer multiple of a subband size corresponding to a channel quality indicator CQI. Therefore, the UE specific subband size configuration enables the user equipment to automatically adapt to different frequency selectivity according to a system configuration, and in particular, to automatically adapt to a change of a coherence bandwidth (coherence bandwidth) of a channel between the UE and the base station, so as to improve CSI feedback precision, and improve a system performance.

FIG. 2 is a schematic flowchart of another CSI reporting method according to an embodiment of the present invention. As shown in FIG. 2, the method may be applied to a base station and include the following steps:
201. Send subband size configuration information to UE, where the subband size configuration information includes a UE specific subband size configuration index.

Optionally, the base station may send the subband size configuration information to the UE by using UE specific (UE specific) signaling such as dedicated radio resource control RRC signaling, or downlink control information DCI.

Optionally, after receiving the subband size configuration information, the UE may determine a subband size according to the UE specific subband size configuration index; calculate CSI, where the CSI reflects transmission on at least one subband, and the subband is determined according to the subband size; and then send the CSI to the base station.

202. Receive CSI sent by the UE, where the CSI reflects transmission on at least one subband, the subband is determined according to a subband size, and the subband size is determined according to the UE specific subband size configuration index.

Optionally, the CSI sent by the UE may be received by using a physical uplink control channel (Physical Uplink Contol Channel, PUCCH for short) or a physical uplink shared channel (Physical Uplink Shared Channel, PUSCH for short).

Optionally, the CSI reflects transmission on at least one subband. The base station may determine, according to the UE specific subband size configuration index sent by the base station, a subband size used by the UE, and divide a system bandwidth into multiple subbands according to the subband size, to determine a size/sizes and a corresponding location/corresponding locations that are of one or more subbands reflected by the received CSI, so that CSI information on the at least one subband is used for scheduling. Obviously, the subband division is also UE specific. Subband sizes of different UEs may be different.

Optionally, because the UEs are in different cell environments, channel propagation between the UEs and the base station has different delay spreads and accordingly has different correlation bandwidths. The coherence bandwidth is generally inversely proportional to the delay spread. For example, UE located in an urban micro cell (Urban Micro cell, UMi) generally has a larger delay spread than UE located in an urban macro cell (Urban Macro cell, UMa), and accordingly has a lower coherence bandwidth. In addition, even if the UEs are in a same cell, different locations of the UEs, and in particular, different distances between the UEs and the base station or different heights at which the UEs are located result in different delay spreads of propagation between the UEs and the base station. In the foregoing case, the base station may determine a UE specific (UE specific) subband size configuration for the UE. For example, a UE specific (UE specific) subband size may be determined according to a coherence bandwidth of a channel between the UE and the base station. For example, a subband size for which a similarity of the coherence bandwidth of the channel between the UE and the base station is greater than a preset threshold is determined as the UE specific (UE specific) subband size. The foregoing preset threshold may be negotiated between the base station and the UE in advance, or may be set by a user, for example, a value such as 90%, 95%, or 100%. Therefore, it is ensured that the foregoing target subband size is relatively close to or even equal to a size of the foregoing coherence bandwidth. In actual application, the foregoing coherence bandwidth may vary with a location in which a user is located, and it can be implemented, by using the foregoing step, that the UE specific (UE specific) subband size may also vary with the location in which the user is located.

Optionally, the base station may obtain a delay spread or a coherence bandwidth (coherence bandwidth) of an uplink channel by measuring an uplink physical signal such as a sounding reference signal (Sounding Referene Signal, SRS for short) or an uplink demodulation reference signal (DeModulation Reference Signal, DMRS for short) of the UE, and may obtain a delay spread or a coherence bandwidth of a downlink channel based on channel reciprocity (reciprocity), so as to determine the subband size for the UE. Similarly, the base station may determine the subband size for the UE by measuring an uplink physical channel such as a physical uplink control channel (Physical Uplink Contronl CHannel, PUCCH for short) or a physical uplink shared channel (Physical Uplink Shared CHannel, PUSCH for short) of the UE. Because channels between the different UEs and the base station are UE specific, the subband size obtained based on the foregoing channel measurement is also UE specific.

Optionally, the base station may send the UE specific subband size configuration index (subband size configuration index) to the UE to instruct the UE to use the UE specific subband size, where the UE specific subband size used by the UE is corresponding to the UE specific subband size configuration index.

Optionally, the foregoing method may be specifically applied to the base station, that is, the base station may implement the foregoing method.

In this embodiment, a base station sends a UE specific subband size configuration index to UE, so that the UE can calculate and feed back CSI based on a subband size corresponding to the UE specific subband size configuration index. Therefore, it can be implemented that a subband size of a subband reflected by the CSI is a UE specific subband size specified by the base station, so that the subband size can better adapt to an environment of the UE, and performance of a communications system can be improved. In addition, it can be implemented that the subband size of the subband reflected by the CSI is specified by the base station, and therefore, the base station can enable the user to automatically adapt to different propagation environments according to a system configuration, and in particular, to automatically adapt to a change of a coherence bandwidth (coherence bandwidth) of a channel between the UE and the base station. In addition, because the subband size of the CSI is the UE specific subband size, CSI feedback precision can be improved, thereby improving the system performance.

Optionally, in an embodiment, before step 201, the base station may further receive a subband size indication reported by the UE, and the base station may determine the UE specific subband size configuration index according to the subband size indication reported by the UE. The subband size indication may be the same as the UE specific subband size configuration index configured by the base station. Specifically, the UE may further obtain a delay spread or a coherence bandwidth of a channel between the UE and the base station by measuring a downlink reference signal, such as a cell specific reference signal CRS or a channel state information-reference signal CSI-RS, and select a subband size based on the delay spread or the coherence bandwidth, where the subband size indication is corresponding to the selected subband size.

Optionally, in another embodiment, the method may include:
determining the subband size from a subband size set according to the UE specific subband size configuration index.

Because the foregoing subband size is notified to the UE by the base station, the base station then determines, according to information notified to the UE, a subband that is used by CSI reported by the UE, that is, the base station considers by default that the UE executes CSI feeding back according to the notification of the base station.

Optionally, the subband size set may include multiple same or different subband sizes. The subband size configuration index is used to indicate a subband size in the subband size set. Each subband size in the subband size set is corresponding to one subband size configuration index. It should be further noted that the subband size set may include multiple subband sizes with a same value.

Optionally, a mapping relationship or a correspondence between the subband size set or a subband size configuration index and each subband size in the subband size set may be predefined (predefined), and is mutually known to the UE and the base station. For example, subband sizes corresponding to different subband size configuration indexes may be shown in Table 1.

Optionally, the base station may obtain a subband size from the subband size set in the foregoing table according to the UE specific subband size configuration index sent to the UE. For example, when UE specific subband size configuration indexes SCIUE are 0, 1, 2, and 3, subband sizes K may be obtained and are B, 2B, 3B, and 4B respectively, where B may be 1. In addition, the subband size may also be a predefined function of a subband size configuration index.

Further, the subband size set may be a cell specific (cell specific) subband size set.

Optionally, the method may further include:
sending a cell specific subband size configuration index to the UE, where the cell specific subband size set is determined according to the cell specific subband size configuration index.

Optionally, the cell specific subband size set is indicated by the cell specific subband size configuration index notified by the base station. Specifically, a cell specific subband size set corresponding to a cell specific subband size configuration index may be shown in Table 2.

Optionally, the cell specific subband size configuration index may be a cell type or obtained according to a cell identity (cell ID).

Optionally, the band size set configuration information in step 201 in the method may further include a cell specific subband size configuration index, and the foregoing cell specific subband size set is determined according to the cell specific subband size configuration index.

Optionally, in another embodiment, the subband size may be determined from a cell specific subband size set according to the UE specific subband size configuration index, where the cell specific subband set is determined according to the cell specific subband size configuration index, or the subband size may be determined from a subband size set according to the cell specific subband size configuration index and the UE specific subband size configuration index.

Specifically, the cell specific subband size set may be first determined according to the cell specific subband size configuration index, and then the subband size is determined from the cell specific subband size set according to the UE specific subband size configuration index, or the subband size is determined from the subband size set according to both the cell specific subband size configuration index and the UE specific subband size configuration index. As shown in Table 2, when the foregoing cell specific subband size configuration index is 2 and the foregoing UE specific subband size configuration index is 3, it may be directly determined that the subband size is a subband size of 8B. Specifically, multiple subband sizes (which belong to different cell specific subband size sets) may be determined according to the UE specific subband size configuration index, and then a subband size is determined according to the cell specific subband size configuration index, that is, the subband size that is determined according to the UE specific subband size configuration index and included in the cell specific subband size set is obtained. As shown in Table 2, when the foregoing cell specific subband size configuration index is 0 and the foregoing UE specific subband size configuration index is 1, subband sizes 2B, 4B, 2B, and 4B may be first determined according to the foregoing UE specific subband size configuration index 1, and then a subband size set 0 is determined according to the cell specific subband size configuration index 0, to determine a subband size 2B included in the subband size set 0.

In this embodiment, a base station configures, by using a cell specific subband size configuration index and a UE specific (UE specific) subband size configuration index, a subband size used by UE for CSI feeding back, where the subband size is obtained from a cell specific subband size set, so that the UE can obtain a UE specific subband size based on different cell environments (for example, different radio propagation characteristics in a macro cell and a micro cell), and calculate and feed back CSI. Therefore, the UE specific subband size configuration enables the user equipment to automatically adapt to different propagation environments according to a system configuration and particularly radio propagation characteristics in different cell environments, and in particular, to automatically adapt to a change of a coherence bandwidth (coherence bandwidth) of a channel between the UE and the base station, so as to improve CSI feedback precision, and improve a system performance.

Optionally, in another embodiment, the CSI in step 202 may include a channel quality indicator CQI and a precoding matrix indicator PMI or a rank indicator RI.

A subband size corresponding to the precoding matrix indicator PMI or the rank indicator RI may be N times a subband size corresponding to the channel quality indicator CQI. In addition, the subband size corresponding to the precoding matrix indicator PMI may be understood as a subband size used by the PMI, the subband size corresponding to the RI may be understood as a subband size used by the RI, and the subband size corresponding to the CQI may be understood as a subband size used by the CQI, where the subband size used by the CQI is the subband size determined according to the subband size configuration index. N is an integer greater than or equal to 1, and a specific value of N may be determined according to a UE transmission mode or a CSI reporting mode.

Because the channel quality indicator CQI is generally used for scheduling and user pairing, the CQI has stronger frequency selectivity than the PMI or the RI. The subband size corresponding to the CQI is 1/N the subband size corresponding to the precoding matrix indicator PMI or the rank indicator RI, and better helps implement frequency selective scheduling, thereby improving a provided throughput.

In this embodiment, a base station configures, by using a UE specific (UE specific) subband size configuration index, a UE specific subband size used by UE for CSI feeding back, so that the UE can obtain the UE specific subband size based on different radio propagation characteristics, and calculate and feed back CSI, where a subband size corresponding to a precoding matrix indicator PMI or a rank indicator RI is an integer multiple of a subband size corresponding to a channel quality indicator CQI. Therefore, the UE specific subband size configuration enables the user equipment to automatically adapt to different frequency selectivity according to a system configuration, and in particular, to automatically adapt to a change of a coherence bandwidth (coherence bandwidth) of a channel between the UE and the base station, so as to improve CSI feedback precision, and improve a system performance.

The following is apparatus embodiments of the present invention, and the apparatus embodiments of the present invention are used to execute methods implemented in the first and the second method embodiments of the present invention. For ease of description, only a part related to the embodiments of the present invention is shown. For specific technical details that are not disclosed, refer to Embodiment 1 and Embodiment 2 of the present invention.

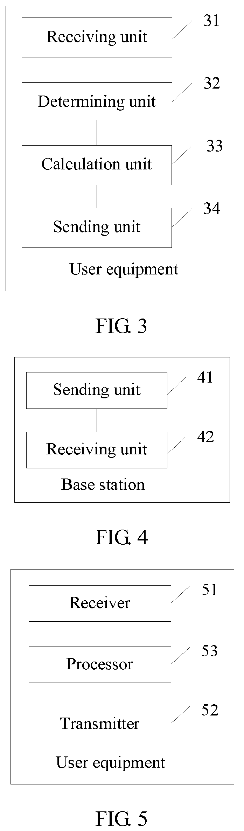

FIG. 3 is a schematic structural diagram of user equipment according to an embodiment of the present invention. As shown in FIG. 3, the user equipment includes: a receiving unit 31, a determining unit 32, a calculation unit 33, and a sending unit 34.

The receiving unit 31 is configured to receive subband size configuration information sent by a base station, where the subband size configuration information includes a UE specific subband size configuration index.

Optionally, the subband size configuration information may be received by using UE specific signaling such as dedicated radio resource control RRC signaling, or downlink control information DCI.

The determining unit 32 is configured to determine a subband size according to the UE specific subband size configuration index.

Optionally, the determining unit 32 may obtain the subband size according to a mapping relationship between the UE specific subband size configuration index and the subband size.

The calculation unit 33 is configured to determine CSI, where the CSI reflects transmission on at least one subband, and the subband is determined according to the subband size.

Optionally, a system bandwidth may be divided into multiple subbands according to the subband size. One or more subbands reflected by the CSI may be determined according to the subband division. Obviously, the subband division is also UE specific. Subband sizes of different UEs may be different.

Optionally, the CSI may include a channel quality indicator CQI or a precoding matrix indicator PMI or a rank indicator RI, or the like.

The sending unit 34 is configured to send the CSI to the base station.

A subband size in this embodiment is obtained according to a UE specific (UE specific) subband size configuration index, so that UE can calculate and feed back CSI based on the UE specific subband size. Therefore, it can be implemented that a subband size of a subband reflected by the CSI is a UE specific subband size specified by a base station, so that the subband size can better adapt to an environment of the UE, and performance of a communications system can be improved. In addition, the UE specific subband size configuration enables the user equipment to automatically adapt to different propagation environments according to a system configuration, and in particular, to automatically adapt to a change of a coherence bandwidth (coherence bandwidth) of a channel between the UE and the base station. In addition, because the subband size of the CSI is the UE specific subband size, CSI feedback precision can be improved, thereby improving the system performance.

Optionally, in an embodiment, the sending unit 34 may be further configured to report a subband size indication to the base station, and the base station may determine the UE specific subband size configuration index according to the subband size indication reported by the UE. The subband size indication may be the same as the UE specific subband size configuration index configured by the base station. Specifically, the UE may further obtain a delay spread or a coherence bandwidth of a channel between the UE and the base station by measuring a downlink reference signal, such as a cell specific reference signal CRS or a channel state information-reference signal CSI-RS, and select a subband size based on the delay spread or the coherence bandwidth, where the subband size indication is corresponding to the selected subband size.

Optionally, in another embodiment, the determining unit 32 may be configured to determine a subband size from a subband size set according to the UE specific subband size configuration index.

Specifically, the subband size set may include multiple same or different subband sizes. The subband size configuration index is used to indicate a subband size in the subband size set. Each subband size in the subband size set is corresponding to one subband size configuration index. It should be further noted that the subband size set may include multiple subband sizes with a same value. A mapping relationship or a correspondence between the subband size set or the subband size configuration index and each subband size in the subband size set may be predefined (predefined), and is mutually known to the UE and the base station. For example, subband sizes corresponding to different subband size configuration indexes may be shown in Table 1.

Further, the subband size set may be a cell specific (cell specific) subband size set.

Optionally, in another embodiment, the determining unit 32 may be configured to determine a subband size from a cell specific subband size set according to the UE specific subband size configuration index.

Optionally, the receiving unit 31 may be further configured to receive a cell specific subband size configuration index sent by the base station.

The determining unit 32 may be configured to determine the cell specific subband size set according to the cell specific subband size configuration index.

Optionally, the cell specific subband size set is indicated by the cell specific subband size configuration index notified by the base station. Specifically, a cell specific subband size set corresponding to a cell specific subband size configuration index may be shown in Table 2.

Optionally, the cell specific subband size configuration index may be a cell type or obtained according to a cell identity (cell ID).

Optionally, the subband size configuration information received by the receiving unit 31 may further include a cell specific subband size configuration index, that is, the receiving unit 31 may be further configured to receive the cell specific subband size configuration index sent by the base station. Therefore, the cell specific subband size set used by the determining unit 32 is determined according to the cell specific subband size configuration index, that is, the determining unit 32 may be further configured to determine the cell specific subband size set according to the cell specific subband size configuration index information.

Optionally, in another embodiment, the determining unit 32 may be configured to determine a subband size from a subband size set according to the cell specific subband size set configuration index and the UE specific subband size configuration index.

The determined subband size is a subband size of the foregoing cell specific subband size configuration index and the UE specific subband size configuration index. Specifically, the cell specific subband size set may be first determined according to the cell specific subband size configuration index, and then the subband size is determined from the cell specific subband size set according to the UE specific subband size configuration index, or the subband size is determined from the subband size set according to both the cell specific subband size configuration index and the UE specific subband size configuration index. As shown in Table 2, when the foregoing cell specific subband size configuration index is 1 and the foregoing UE specific subband size configuration index is 1, it may be directly determined that the subband size is a subband size of 4B. Specifically, multiple subband sizes (which belong to different cell specific subband size sets) may be determined according to the UE specific subband size configuration index, and then a subband size is determined according to the cell specific subband size configuration index, that is, the subband size that is determined according to the UE specific subband size configuration index and included in the cell specific subband size set is obtained. As shown in Table 2, when the foregoing cell specific subband size configuration index is 1 and the foregoing UE specific subband size configuration index is 1, subband sizes 2B, 4B, 2B, and 4B may be first determined according to the foregoing UE specific subband size configuration index 1, and then a subband size set 1 is determined according to the cell specific subband size configuration index 1, to determine a subband size 4B included in the subband size set 1.

In this embodiment, the user equipment obtains a subband size from a cell specific subband size set according to a UE specific (UE specific) subband size configuration index, so that the UE can obtain the UE specific subband size based on different cell environments (for example, different radio propagation characteristics in a macro cell and a micro cell), and calculate and feed back CSI. Therefore, the UE specific subband size configuration enables the user equipment to automatically adapt to different propagation environments according to a system configuration and particularly radio propagation characteristics in different cell environments, and in particular, to automatically adapt to a change of a coherence bandwidth (coherence bandwidth) of a channel between the UE and the base station, so as to improve CSI feedback precision, and improve a system performance.

Optionally, in another embodiment, the sending unit 34 is configured to send the CSI to the base station, where the CSI may include a channel quality indicator CQI and a precoding matrix indicator PMI or a rank indicator RI.

A subband size corresponding to the precoding matrix indicator PMI or the rank indicator RI may be N times a subband size corresponding to the channel quality indicator CQI. In addition, the subband size corresponding to the precoding matrix indicator PMI may be understood as a subband size used by the PMI, the subband size corresponding to the RI may be understood as a subband size used by the RI, and the subband size corresponding to the CQI may be understood as a subband size used by the CQI, where the subband size used by the CQI is the subband size determined according to the subband size configuration index. N is a positive integer, and a specific value of N may be determined according to a UE transmission mode or a CSI reporting mode.

Because the channel quality indicator CQI is generally used for scheduling and user pairing, the CQI has stronger frequency selectivity than the PMI or the RI. The subband size corresponding to the CQI is 1/N the subband size corresponding to the precoding matrix indicator PMI or the rank indicator RI, and better helps implement frequency selective scheduling, thereby improving a provided throughput.

In this embodiment, the user equipment obtains a subband size from a cell specific subband size set according to a UE specific (UE specific) subband size configuration index, where a subband size corresponding to a precoding matrix indicator PMI or a rank indicator RI is an integer multiple of a subband size corresponding to a channel quality indicator CQI. Therefore, the UE specific subband size configuration enables the user equipment to automatically adapt to different frequency selectivity according to a system configuration, and in particular, to automatically adapt to a change of a coherence bandwidth (coherence bandwidth) of a channel between the UE and the base station, so as to improve CSI feedback precision, and improve a system performance.

FIG. 4 is a schematic structural diagram of a base station according to an embodiment of the present invention. As shown in FIG. 4, the base station includes: a sending unit 41 and a receiving unit 42.

The sending unit 41 is configured to send subband size configuration information to UE, where the subband size configuration information includes a UE specific subband size configuration index.

Optionally, the subband size configuration information may be sent to the UE by using UE specific (UE specific) signaling such as dedicated radio resource control RRC signaling, or downlink control information DCI.

Optionally, after receiving the subband size configuration information, the UE may determine a subband size according to the UE specific subband size configuration index; calculate CSI, where the CSI reflects transmission on at least one subband, and the subband is determined according to the subband size; and then send the CSI to the base station.

The receiving unit 42 is configured to receive CSI sent by the UE, where the CSI reflects transmission on at least one subband, the subband is determined according to a subband size, and the subband size is determined according to the UE specific subband size configuration index.

Optionally, the CSI sent by the UE may be received by using a physical uplink control channel PUCCH or a physical uplink shared channel PUSCH.

Optionally, because UEs (UE) are in different cell environments, channel propagation between the UEs and the base station has different delay spreads and accordingly has different correlation bandwidths. The coherence bandwidth is generally inversely proportional to the delay spread. For example, UE located in an urban micro cell (Urban Micro cell, UMi) generally has a larger delay spread than UE located in an urban macro cell (Urban Macro cell, UMa), and accordingly has a lower coherence bandwidth. In addition, even if the UEs are in a same cell, different locations of the UEs, and in particular, different distances between the UEs and the base station or different heights at which the UEs are located result in different delay spreads of propagation between the UEs and the base station. In the foregoing case, the base station may determine a UE specific (UE specific) subband size configuration for the UE. For example, a UE specific (UE specific) subband size may be determined according to a coherence bandwidth of a channel between the UE and the base station. For example, a subband size for which a similarity of the coherence bandwidth of the channel between the UE and the base station is greater than a preset threshold is determined as the UE specific (UE specific) subband size. The foregoing preset threshold may be negotiated between the base station and the UE in advance, or may be set by a user, for example, a value such as 90%, 95%, or 100%. Therefore, it is ensured that the foregoing target subband size is relatively close to or even equal to a size of the foregoing coherence bandwidth. In actual application, the foregoing coherence bandwidth may vary with a location in which a user is located, and it can be implemented, by using the foregoing step, that the UE specific (UE specific) subband size may also vary with the location in which the user is located.

In this embodiment, a base station sends a UE specific subband size configuration index to UE, so that the UE can calculate and feed back CSI based on a subband size corresponding to the UE specific subband size configuration index. Therefore, it can be implemented that a subband size of a subband reflected by the CSI is a UE specific subband size specified by the base station, so that the subband size can better adapt to an environment of the UE, and performance of a communications system can be improved. In addition, it can be implemented that the subband size of the subband reflected by the CSI is specified by the base station, and therefore, the base station can enable the user to automatically adapt to different propagation environments according to a system configuration, and in particular, to automatically adapt to a change of a coherence bandwidth (coherence bandwidth) of a channel between the UE and the base station. In addition, because the subband size of the CSI is the UE specific subband size, CSI feedback precision can be improved, thereby improving the system performance.

Optionally, in an embodiment, the receiving unit 42 may be further configured to receive a subband size indication reported by the UE, and determine the UE specific subband size configuration index according to the subband size indication reported by the UE. The subband size indication may be the same as the UE specific subband size configuration index configured by the base station. Specifically, the UE may further obtain a delay spread or a coherence bandwidth of a channel between the UE and the base station by measuring a downlink reference signal, such as a cell specific reference signal CRS or a channel state information-reference signal CSI-RS, and select a subband size based on the delay spread or the coherence bandwidth, where the subband size indication is corresponding to the selected subband size.

Optionally, in another embodiment, the base station may further include:
a determining unit 43, configured to determine the subband size from a subband size set according to the UE specific subband size configuration index.

Optionally, the subband size set may include multiple same or different subband sizes. The subband size configuration index is used to indicate a subband size in the subband size set. Each subband size in the subband size set is corresponding to one subband size configuration index. It should be further noted that the subband size set may include multiple subband sizes with a same value.

Optionally, a mapping relationship or a correspondence between the subband size set or a subband size configuration index and each subband size in the subband size set may be predefined (predefined), and is mutually known to the UE and the base station. For example, subband sizes corresponding to different subband size configuration indexes may be shown in Table 1.

The base station may obtain a subband size from a subband size set in the foregoing table according to the UE specific subband size configuration index sent to the UE. In addition, the subband size may also be a predefined function of a subband size configuration index.

Further, the subband size set may be a cell specific (cell specific) subband size set.

Optionally, the sending unit 41 may be further configured to send a cell specific subband size configuration index to the UE, where the cell specific subband size set is determined according to the cell specific subband size configuration index.

Optionally, the cell specific subband size set is indicated by the cell specific subband size configuration index notified by the base station. Specifically, a cell specific subband size set corresponding to a cell specific subband size configuration index may be shown in Table 2.

Optionally, the cell specific subband size configuration index may be a cell type or obtained according to a cell identity (cell ID).

Optionally, the band size set configuration information may further include a cell specific subband size configuration index, and the foregoing cell specific subband size set is determined according to the cell specific subband size configuration index. Optionally, in another embodiment, the subband size may be determined from a cell specific subband size set according to the UE specific subband size configuration index, where the cell specific subband set is determined according to the cell specific subband size configuration index, or the subband size may be determined from a subband size set according to the cell specific subband size configuration index and the UE specific subband size configuration index.

Specifically, the cell specific subband size set may be first determined according to the cell specific subband size configuration index, and then the subband size is determined from the cell specific subband size set according to the UE specific subband size configuration index, or the subband size is determined from the subband size set according to both the cell specific subband size configuration index and the UE specific subband size configuration index. As shown in Table 2, when the foregoing cell specific subband size configuration index is 2 and the foregoing UE specific subband size configuration index is 3, it may be directly determined that the subband size is a subband size of 8B. Specifically, multiple subband sizes (which belong to different cell specific subband size sets) may be determined according to the UE specific subband size configuration index, and then a subband size is determined according to the cell specific subband size configuration index, that is, the subband size that is determined according to the UE specific subband size configuration index and included in the cell specific subband size set is obtained. As shown in Table 2, when the foregoing cell specific subband size configuration index is 0 and the foregoing UE specific subband size configuration index is 1, subband sizes 2B, 4B, 2B, and 4B may be first determined according to the foregoing UE specific subband size configuration index 1, and then a subband size set 0 is determined according to the cell specific subband size configuration index 0, to determine a subband size 2B included in the subband size set 0.

In this embodiment, the base station configures, by using a cell specific subband size configuration index and a UE specific (UE specific) subband size configuration index, a subband size used by UE for CSI feeding back, where the subband size is obtained from a cell specific subband size set, so that the UE can obtain a UE specific subband size based on different cell environments (for example, different radio propagation characteristics in a macro cell and a micro cell), and calculate and feed back CSI. Therefore, the UE specific subband size configuration enables the user equipment to automatically adapt to different propagation environments according to a system configuration and particularly radio propagation characteristics in different cell environments, and in particular, to automatically adapt to a change of a coherence bandwidth (coherence bandwidth) of a channel between the UE and the base station, so as to improve CSI feedback precision, and improve a system performance.

Optionally, in another embodiment, the CSI received by the receiving unit 42 may include a channel quality indicator CQI and a precoding matrix indicator PMI or a rank indicator RI.

A subband size corresponding to the precoding matrix indicator PMI or the rank indicator RI may be N times a subband size corresponding to the channel quality indicator CQI. In addition, the subband size corresponding to the precoding matrix indicator PMI may be understood as a subband size used by the PMI, the subband size corresponding to the RI may be understood as a subband size used by the RI, and the subband size corresponding to the CQI may be understood as a subband size used by the CQI, where the subband size used by the CQI is the subband size determined according to the subband size configuration index. N is an integer greater than or equal to 1, and a specific value of N may be determined according to a UE transmission mode or a CSI reporting mode.

Because the channel quality indicator CQI is generally used for scheduling and user pairing, the CQI has stronger frequency selectivity than the PMI or the RI. The subband size corresponding to the CQI is 1/N the subband size corresponding to the precoding matrix indicator PMI or the rank indicator RI, and better helps implement frequency selective scheduling, thereby improving a provided throughput.

In this embodiment, a base station configures, by using a UE specific (UE specific) subband size configuration index, a UE specific subband size used by UE for CSI feeding back, so that the UE can obtain the UE specific subband size based on different radio propagation characteristics, and calculate and feed back CSI, where a subband size corresponding to a precoding matrix indicator PMI or a rank indicator RI is an integer multiple of a subband size corresponding to a channel quality indicator CQI. Therefore, the UE specific subband size configuration enables the user equipment to automatically adapt to different frequency selectivity according to a system configuration, and in particular, to automatically adapt to a change of a coherence bandwidth (coherence bandwidth) of a channel between the UE and the base station, so as to improve CSI feedback precision, and improve a system performance.

FIG. 5 is a schematic structural diagram of user equipment according to an embodiment of the present invention. As shown in FIG. 5, the user equipment includes: a receiver 51, a transmitter 52, and a processor 53 that is separately connected to the receiver 51 and the transmitter 52.

The receiver 51 is configured to receive subband size configuration information sent by a base station, where the subband size configuration information includes a UE specific subband size configuration index.

The processor 53 is configured to determine a subband size according to the UE specific subband size configuration index.

The processor 53 is further configured to determine CSI, where the CSI reflects transmission on at least one subband, and the subband is determined according to the subband size.

The transmitter 52 is configured to send the CSI to the base station.

Optionally, the processor 52 may be configured to determine a subband size from a subband size set according to the UE specific subband size configuration index.

Optionally, the subband size set may be a cell specific subband size set.

Optionally, the receiver 51 may be further configured to receive a cell specific subband size configuration index sent by the base station, where the cell specific subband size set is determined according to the cell specific subband size configuration index. In this way, the processor 52 can determine the cell specific subband size according to the cell specific subband size configuration index.

Optionally, the CSI may include a channel quality indicator CQI and a precoding matrix indicator PMI, a subband size used by the PMI is N times a subband size used by the CQI, the subband size used by the CQI is the subband size determined according to the subband size configuration index, and N is a positive integer.

A subband size in this embodiment is obtained according to a UE specific (UE specific) subband size configuration index, so that UE can calculate and feed back CSI based on the UE specific subband size. Therefore, it can be implemented that a subband size of a subband reflected by the CSI is a UE specific subband size specified by a base station, so that the subband size can better adapt to an environment of the UE, and performance of a communications system can be improved. In addition, the UE specific subband size configuration enables the user equipment to automatically adapt to different propagation environments according to a system configuration, and in particular, to automatically adapt to a change of a coherence bandwidth (coherence bandwidth) of a channel between the UE and the base station. In addition, because the subband size of the CSI is the UE specific subband size, CSI feedback precision can be improved, thereby improving the system performance.

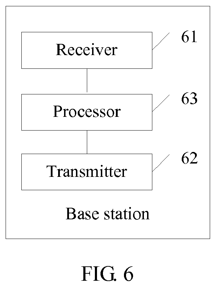

FIG. 6 is a schematic structural diagram of a base station according to an embodiment of the present invention. As shown in FIG. 6, the base station includes: a transmitter 61 and a receiver 62.

The transmitter 61 is configured to send subband size configuration information to UE, where the subband size configuration information includes a UE specific subband size configuration index.

The receiver 62 is configured to receive CSI sent by the UE, where the CSI reflects transmission on at least one subband, the subband is determined according to a subband size, and the subband size is determined according to the UE specific subband size configuration index.

Optionally, the foregoing base station may further include:
a processor 63, configured to determine the subband size from a subband size set according to the UE specific subband size configuration index.

Optionally, the subband size set may be a cell specific subband size set.

Optionally, the transmitter 62 may be further configured to send a cell specific subband size configuration index to the UE, so that it can be implemented that the cell specific subband size set can be determined according to the cell specific subband size configuration index.

Optionally, the CSI includes a channel quality indicator CQI and a precoding matrix indicator PMI, a subband size used by the PMI is N times a subband size used by the CQI, the subband size used by the CQI is the subband size determined according to the subband size configuration index, and N is a positive integer.

In this embodiment, a base station sends a UE specific subband size configuration index to UE, so that the UE can calculate and feed back CSI based on a subband size corresponding to the UE specific subband size configuration index. Therefore, it can be implemented that a subband size of a subband reflected by the CSI is a UE specific subband size specified by the base station, so that the subband size can better adapt to an environment of the UE, and performance of a communications system can be improved. In addition, it can be implemented that the subband size of the subband reflected by the CSI is specified by the base station, and therefore, the base station can enable the user to automatically adapt to different propagation environments according to a system configuration, and in particular, to automatically adapt to a change of a coherence bandwidth (coherence bandwidth) of a channel between the UE and the base station. In addition, because the subband size of the CSI is the UE specific subband size, CSI feedback precision can be improved, thereby improving the system performance.

A person of ordinary skill in the art may understand that all or some of the procedures of the methods in the foregoing embodiments may be implemented by a computer program instructing relevant hardware. The program may be stored in a computer readable storage medium. When the program runs, the procedures of the foregoing method embodiments are performed. The storage medium may be a magnetic disc, an optical disc, a read-only memory (Read-Only Memory, ROM), a random access memory (Random Access Memory, RAM for short), or the like.

What is disclosed above is merely exemplary embodiments of the present invention, and certainly is not intended to limit the protection scope of the present invention. Therefore, equivalent variations made in accordance with the claims of the present invention shall fall within the scope of the present invention.

## Claims

1. A channel state information CSI reporting method, comprising:
receiving subband size configuration information sent by a base station, wherein the subband size configuration information comprises a user equipment-specific subband size configuration index;
determining a subband size according to the user equipment-specific subband size configuration index;
determining CSI, wherein the CSI reflects transmission on at least one subband, and the subband is determined according to the subband size; and
sending the CSI to the base station.

2. The method according to claim 1, wherein the determining a subband size according to the user equipment-specific subband size configuration index comprises:
determining a subband size from a subband size set according to the user equipment-specific subband size configuration index.

3. The method according to claim 2, wherein the subband size set is a cell specific subband size set.

4. The method according to claim 3, wherein the method further comprises:
receiving a cell specific subband size configuration index sent by the base station, wherein the cell specific subband size set is determined according to the cell specific subband size configuration index.

5. The method according to any one of claims 1 to 4, wherein the CSI comprises a channel quality indicator CQI and a precoding matrix indicator PMI, a subband size used by the PMI is N times a subband size used by the CQI, the subband size used by the CQI is the subband size determined according to the subband size configuration index, and N is a positive integer.

6. A CSI reporting method, comprising:
sending subband size configuration information to user equipment, wherein the subband size configuration information comprises a user equipment-specific subband size configuration index; and
receiving CSI sent by the user equipment, wherein the CSI reflects transmission on at least one subband, the subband is determined according to a subband size, and the subband size is determined according to the user equipment-specific subband size configuration index.

7. The method according to claim 6, wherein the method further comprises:
determining the subband size from a subband size set according to the user equipment-specific subband size configuration index.

8. The method according to claim 7, wherein the subband size set is a cell specific subband size set.

9. The method according to claim 8, wherein the method further comprises:
sending a cell specific subband size configuration index to the user equipment, wherein the cell specific subband size set is determined according to the cell specific subband size configuration index.

10. The method according to any one of claims 6 to 9, wherein the CSI comprises a channel quality indicator CQI and a precoding matrix indicator PMI, a subband size used by the PMI is N times a subband size used by the CQI, the subband size used by the CQI is the subband size determined according to the subband size configuration index, and N is a positive integer.

11. User equipment, comprising: a receiving unit, a determining unit, a calculation unit, and a sending unit, wherein
the receiving unit is configured to receive subband size configuration information sent by a base station, wherein the subband size configuration information comprises a user equipment-specific subband size configuration index;
the determining unit is configured to determine a subband size according to the user equipment-specific subband size configuration index;
the calculation unit is configured to determine channel state information CSI, wherein the CSI reflects transmission on at least one subband, and the subband is determined according to the subband size; and
the sending unit is configured to send the CSI to the base station.

12. The user equipment according to claim 11, wherein the determining unit is specifically configured to determine a subband size from a subband size set according to the user equipment-specific subband size configuration index.

13. The user equipment according to claim 12, wherein the subband size set is a cell specific subband size set.

14. The user equipment according to claim 13, wherein the receiving unit is further configured to receive a cell specific subband size configuration index sent by the base station; and
the determining unit is further configured to determine the cell specific subband size set according to the cell specific subband size configuration index information.

15. The user equipment according to any one of claims 11 to 14, wherein the CSI comprises a channel quality indicator CQI and a precoding matrix indicator PMI, a subband size used by the PMI is N times a subband size used by the CQI, the subband size used by the CQI is the subband size determined according to the subband size configuration index, and N is a positive integer.

16. Abase station, comprising: a sending unit and a receiving unit, wherein
the sending unit is configured to send subband size configuration information to user equipment, wherein the subband size configuration information comprises a user equipment-specific subband size configuration index; and
the receiving unit is configured to receive channel state information CSI sent by the user equipment, wherein the CSI reflects transmission on at least one subband, the subband is determined according to a subband size, and the subband size is determined according to the user equipment-specific subband size configuration index.

17. The base station according to claim 16, wherein the apparatus further comprises:
a determining unit, configured to determine the subband size from a subband size set according to the user equipment-specific subband size configuration index.

18. The base station according to claim 17, wherein the subband size set is a cell specific subband size set.

19. The base station according to claim 18, wherein the sending unit is further configured to send a cell specific subband size configuration index to the user equipment, wherein the cell specific subband size set is determined according to the cell specific subband size configuration index.

20. The base station according to any one of claims 16 to 19, wherein the CSI comprises a channel quality indicator CQI and a precoding matrix indicator PMI, a subband size used by the PMI is N times a subband size used by the CQI, the subband size used by the CQI is the subband size determined according to the subband size configuration index, and N is a positive integer.

21. User equipment, comprising: a receiver, a transmitter, and a processor that is separately connected to the receiver and the transmitter, wherein
the receiver is configured to receive subband size configuration information sent by a base station, wherein the subband size configuration information comprises a user equipment-specific subband size configuration index;
the processor is configured to determine a subband size according to the user equipment-specific subband size configuration index;
the processor is further configured to determine channel state information CSI, wherein the CSI reflects transmission on at least one subband, and the subband is determined according to the subband size; and
the transmitter is configured to send the CSI to the base station.

22. The user equipment according to claim 21, wherein the processor is configured to determine a subband size from a subband size set according to the user equipment-specific subband size configuration index.

23. The user equipment according to claim 22, wherein the subband size set is a cell specific subband size set.

24. The user equipment according to claim 3, wherein the receiver is further configured to receive a cell specific subband size configuration index sent by the base station, wherein the cell specific subband size set is determined according to the cell specific subband size configuration index.

25. The user equipment according to any one of claims 21 to 24, wherein the CSI comprises a channel quality indicator CQI and a precoding matrix indicator PMI, a subband size used by the PMI is N times a subband size used by the CQI, the subband size used by the CQI is the subband size determined according to the subband size configuration index, and N is a positive integer.

26. Abase station, comprising: a transmitter and a receiver, wherein
the transmitter is configured to send subband size configuration information to user equipment, wherein the subband size configuration information comprises a user equipment-specific subband size configuration index; and
the receiver is configured to receive channel state information CSI sent by the user equipment, wherein the CSI reflects transmission on at least one subband, the subband is determined according to a subband size, and the subband size is determined according to the user equipment-specific subband size configuration index.

27. The base station according to claim 26, wherein the base station further comprises:
a processor, configured to determine the subband size from a subband size set according to the user equipment-specific subband size configuration index.

28. The base station according to claim 27, wherein the subband size set is a cell specific subband size set.

29. The base station according to claim 28, wherein the transmitter is further configured to send a cell specific subband size configuration index to the user equipment, wherein the cell specific subband size set is determined according to the cell specific subband size configuration index.

30. The base station according to any one of claims 26 to 29, wherein the CSI comprises a channel quality indicator CQI and a precoding matrix indicator PMI, a subband size used by the PMI is N times a subband size used by the CQI, the subband size used by the CQI is the subband size determined according to the subband size configuration index, and N is a positive integer.
